(19) **Europäisches Patentamt / European Patent Office / Office européen des brevets**

(11) **EP 1 230 976 B1**

(12) **EUROPÄISCHE PATENTSCHRIFT**

(45) Veröffentlichungstag und Bekanntmachung des Hinweises auf die Patenterteilung:
**24.12.2008 Patentblatt 2008/52**

(51) Int Cl.:
***B01J 20/14*** *(2006.01)*  ***B01D 39/06*** *(2006.01)*
***B01D 39/20*** *(2006.01)*

(21) Anmeldenummer: **01113528.2**

(22) Anmeldetag: **12.06.2001**

(54) **Filterhilfsmittel**

Filter aid

Adjuvant de filtration

(84) Benannte Vertragsstaaten:
**AT BE CH CY DE DK ES FI FR GB GR IE IT LI LU MC NL PT SE TR**

(30) Priorität: **13.02.2001 EP 01102831**

(43) Veröffentlichungstag der Anmeldung:
**14.08.2002 Patentblatt 2002/33**

(73) Patentinhaber: **Lehmann & Voss & Co.**
**D-20354 Hamburg (DE)**

(72) Erfinder:
• **Bald, Werner**
  **22175 Hamburg (DE)**

• **Thoms, Heiko, Dr.**
  **22083 Hamburg (DE)**

(74) Vertreter: **Richter, Werdermann, Gerbaulet & Hofmann**
**Neuer Wall 10**
**20354 Hamburg (DE)**

(56) Entgegenhaltungen:
**EP-A- 0 790 070**      **WO-A-95/11088**
**US-A- 5 179 062**      **US-A- 5 710 090**

**Beschreibung**

Die Erfindung betrifft ein Filterhilfsmittel und seine Verwendung.

Es ist bekannt, Kieselgur als Filterhilfsmittel einzusetzen. Bei Kieselgur handelt es sich um ein sehr feinkörniges, lockeres und leichtes kreideartiges Sediment, das zu den Kieselgesteinen gehört. Kieselgur wird auch als Diatomeenerde, Infusorienerde, Bergmehl oder Bacillarienerde bezeichnet.

Gebrannte Kieselgur ist eine aufbereitete Form, die erhalten wird, indem das Rohprodukt nach seiner Gewinnung und gegebenenfalls einer Vorreinigung zur Abtrennung unerwünschter Bestandteile, wie Sand, einer Wärmebehandlung unterzogen wird, wobei die in dem Rohprodukt enthaltenen organischen Substanzen verbrennen. Gebrannte Kieselgur wird u.a. als Schall- und Wärmedämmstoff, Verpackungsmaterial, als Füllstoff oder als Filterhilfsmittel z. B. in Berkefeld-Filtern zur Filtration eingesetzt (vgl. RÖMPP, Chemie Lexikon, 9. Auflage, Georg Thieme Verlag,1989).

Nachteilig bei gebrannter Kieselgur ist, dass sich in Abhängigkeit der Temperatur beim Brennen zumindest ein Teil der in der Kieselgur enthaltenen amorphen Kieselsäure in eine kristalline Form, insbesondere in Cristobalit, umwandelt. Cristobalit ($SiO_2$) ist ein Mineral in Form einer Hochtemperatur-Modifikation des Siliciumdioxids, die in verschiedenen Phasen vorliegen kann. Cristobalthaltiger Feinstaub ist lungengängig und kann zu Gesundheitsschäden führen. Darüber hinaus werden alle bis heute verfügbaren gebrannten Kieselgur als kanzerogen eingestuft. Sie sind somit kennzeichnungspflichtig.

Der Erfindung liegt deshalb die Aufgabe zugrunde, ein Filterhilfsmittel zur Verfügung zu stellen, das die positiven Materialeigenschaften bekannter Kieselguren aufweist, ohne die nachteiligen Merkmale dieser zu zeigen. Insbesondere ist eine Aufgabe der vorliegenden Erfindung, ein Filterhilfsmittel bereitzustellen, das uncalciniert, d. h. cristobalitfreie Kieselgur enthält.

EP 0 790 070 A1 offenbart eine Filterhilfsmittel, das aus einer aktiven Filtrationskomponente und einer Matrixkomponente besteht. Die Matrixkomponente weist eine geringere Erweichungstemperatur als die aktive Filtrationskomponente auf. Diese und die Matrixkomponente sind innig miteinander verbunden. Zu diesem Zweck wird eine Mischung der beiden Komponenten einer thermischen Sinterung unterzogen. Das Sintern erhöht die Permeabilität des Filterhilfsmittel im Vergleich zu einer nicht gesinterten Mischung. Der Cristobalit-Gehalt des gesinterten Gemisches sollen unter 5 % liegen und beträgt in der Regel 0,1 %. Bei der aktiven Filtrationskomponente handelt es sich um Diatomit, bei der Matrixkomponente um ein Glas, beispielsweise Perlit.

Diese Aufgabe wird durch die in dem Anspruch 1 genannten Merkmale gelöst.

Hiernach besteht das erfindungsgemäße Filterhilfsmittel nach Anspruch 1 aus einer Mischung aus folgenden Komponenten:

- als Komponente A eine im wesentlichen cristobalitfreie, getrocknete und keiner Calcinierung unterworfene, auf Diatomeenerde mit einem Teilchendurchmesser von im wesentlichen 10 µm bis 25 µm basierende Kieselgur mit einer hohen regelmäßigen Porenstruktur und -anordnung von etwa 240 nm bis 310 nm, bevorzugterweise 275 nm Durchmesser mit einem Anteil von 5 % bis 35 % in der Filterhilfsmittelmischung und/oder

- als Komponente A1 eine im wesentlichen cristobalitfreie, getrocknete und keiner Calcinierung unterworfene, auf Diatomeenerde mit einem Teilchendurchmesser von im wesentlichen 10 µm bis 15 µm basierenden Kieselgur mit einer hohen regelmäßigen Porenstruktur und -anordnung von etwa 200 nm bis 270 nm Durchmesser mit einem Anteil von 5 % bis 35 % in der Filterhilfsmittelmischung,

- als Komponente B Perlite aus vulkanischen Obsidiangestein durch thermische Expansion hergestellt und im wesentlichen aus Aluminiumsilikat bestehend, mit einer Kugelfragment-Struktur mit einer vom filigranen Skelett der Diatomeen abweichenden Porosität.

Des Weiteren enthält die Filterhilfsmittelmischung noch als weitere Komponente C eine hochreine, weiße und geruchslose Cellulose.

Besonders vorteilhaft ist eine Filterhilfsmittelmischung mit den Komponenten A und/oder A1, B und C, wobei der Anteil der Komponente A und/oder A1 5 bis 35 %, der Anteil der Komponente B 50 bis 95 % und der Anteil der Komponente C 5 bis 20 % beträgt.

Des weiteren umfasst die Erfindung die Verwendung von im wesentlichen cristobalitfreier Kieselgur als Filterhilfsmittel in der Lebensmittelindustrie und bei der Getränkeherstellung mit verbesserten Filtrationseigenschaften, wobei auch hier eine Filterhilfsmittelmischung mit den Komponenten A und/oder A1 und B oder A und/oder A1, B und C eingesetzt wird.

Das erfindungsgemäße Filterhilfsmittel enthält Kieselgur, die kein Cristobalit enthält. Es kann weitere Komponenten enthalten, mit denen seine Eigenschaften, z. B. hinsichtlich Filterkapazität, Durchlässigkeit, Lebensdauer etc., in gewünschter Weise eingestellt werden können.

Besonders bevorzugt ist bzw. wird der Kieselgurgehalt in dem erfindungsgemäßen Filterhilfsmittel so eingestellt, dass insbesondere die Filtereigenschaften des Filterhilfsmittels im wesentlichen durch die vorteilhaften Eigenschaften der eingesetzten Kieselgur bestimmt werden.

Dadurch, dass das Filterhilfsmittel kein Cristobalit bzw. keine kristallinen Anteile enthält, wird ein Einsatz in Bereichen möglich, der aufgrund gesundheitlicher Bedenken oder gesetzlicher Bestimmungen bisher nicht möglich war.

Vorteilhafter Weise verändert das Filterhilfsmittel die chemische Zusammensetzung der zu filtrierenden Flüssigkeit nicht, sondern verhält sich inert und geschmacksneutral. Des weiteren bildet das Filterhilfsmittel einen festen Filterkuchen mit gleichmäßigem Aufbau, der nach dem Filtrationsprozess problemlos aus dem Filter entfernt werden kann und nicht zerfällt. Schließlich enthält es im wesentlichen keine gesundheitsgefährdenden Substanzen, so dass eine Verwendung in allen Anwendungsbereichen, insbesondere in der Lebensmittelindustrie und bei der Getränkeherstellung, bedenkenlos möglich ist.

Insbesondere hinsichtlich seiner Durchlässigkeits- und Filtereigenschaften ist das Filterhilfsmittel mit den bekannten Filterhilfsmitteln zwar vergleichbar, jedoch in bestimmten Eigenschaften diesen überlegen. Das Filterhilfsmittel zeichnet sich vorteilhafter Weise insbesondere durch seine hohe Klärwirkung aus. Somit stellt es ein vorteilhaftes Substitutionsfiltermittel für Anwendungsbereiche dar, für die nur gesundheitlich unbedenkliche Substanzen verwendet werden dürfen.

Weitere vorteilhafte Ausgestaltungen der Erfindung sind in den Unteransprüchen gekennzeichnet.

Es ist überraschend, dass die Poren der eingesetzten Kieselgur in dem Filterhilfsmittel nicht durch die anderen Komponenten verschlossen werden, wodurch die Filtrationsleistung beeinträchtigt wird.

Am meisten bevorzugt enthält das erfindungsgemäße Filterhilfsmittel eine cristobalitfreie Kieselgur, ein Perlite und/oder eine Cellulose-Komponente.

Die bei dem erfindungsgemäßen Filterhilfsmittel als Komponente A eingesetzte Kieselgur stammt bevorzugterweise aus dem Abbaugebiet Diatomita San Nicolaus in Zacoalco de Torres in Jalisco, Mexiko, Provinz Guadalajara. Sie weist vorzugsweise eine Morphologie und eine Zusammensetzung auf, die bei einer geeigneten Temperatur die Herstellung einer cristobalitfreien oder/und von kristallinen Anteilen freien Kieselgur erlaubt. Die bei dem erfindungsgemäßen Filterhilfsmittel als Komponente A1 eingesetzte Kieselgur stammt bevorzugterweise aus dem Abbaugebiet Liberia/Guanacaste/Costa Rica.

Insbesondere als vorteilhaft hat sich eine derartige Verwendung in der Lebensmittelindustrie, besonders in der Brauereiindustrie, erwiesen, da mit dem erfindungsgemäßen Filterhilfsmittel ein einfach handhabbares, wirksames und kostengünstiges Filtermaterial mit hervorragenden Filtereigenschaften zur Verfügung gestellt wird.

Das erfindungsgemäße cristobalitfreie Filterhilfsmittel enthält eine Mischung aus den Komponenten:

- eine Kieselgur entsprechend Komponent A und/oder A1
- ein Alumosilikat entsprechend Komponent B
- eine Cellulose entsprechend Komponent C

Hierbei stellt die Komponente A und/oder A1 die eigentliche Filtrationskomponente dar.

Die Filtrationseigenschaften werden ganz entscheidend vom Anteil der Komponente A und/oder A1 in den Mischungen bestimmt. Die Mischungen enthalten bevorzugterweise zwischen 5 und 35 % der Komponente A und/oder A1. Die Durchlässigkeiten (gemessen mit dem EBC-Messverfahren) liegen zwischen 0,1 und 0,05 Darcy. Die Komponenten A und A1 können jede für sich in den Gesamtmischungen bzw. in den entsprechenden Verhältnissen zueinander in den neuen Filterhilfsmitteln eingesetzt werden.

Die Komponente A und/oder A1 selbst besitzt allerdings nur eine Durchlässigkeit von 0,010 - 0,013 Darcy und kann daher nicht allein als Filterhilfsmittel eingesetzt werden. Da die Durchlässigkeiten der anderen Mischungsbestandteile deutlich höher liegen und für die Filtration von Bier alleine keine Rolle spielen, führt überraschenderweise die erfindungsgemäße Mischung mit der Komponente A und/oder A1 zu der gewünschten Durchlässigkeit von ca. 0,05 - 0,1 Darcy.

Die eigentliche Filtrationsleistung wird also von der Komponente A übernommen. Aus diesem Grunde wird die Komponente A und/oder A1 mit folgenden Eigenschaften eingesetzt:

- Komponent A bzw. A1 wird als natürliches Produkt gewonnen und vor Verwendung nicht weiter behandelt (nur Trocknung, keine Calcinierung)
- Komponent A bzw. A1 enthält zu über 90 % $SiO_2$
- die als Komponent A bzw. A1 verwendete Diatomeenerde weist einen Teilchendurchmesser von im wesentlichen 10 µm bis 25 µm bzw. 10 µm bis 15 µm auf
- Komponent A bzw. A1 enthält ein weiteres Mineral, z. B. Ton/Tonerde/Kaolin/ Clay (Alumosilikate), das für bestimmte Adsorptionseigenschaften verantwortlich ist.

Diese Eigenschaften sind mit folgenden Ergebnissen untersucht worden:

A. Definition von Abkürzungen und Bezeichnungen im experimentellen Teil (Abbildungen und beschreibender Text)

1. Bezeichnung der Komponenten der Filterhilfsmittelmischungen:

- Komponent A entspricht Celite S (Handelsname) = C
- Komponent A1 entspricht Costalite FN (Handelsname) = C1
- Komponent B entspricht Harborlite 635 (Handelsname) = H
- Komponent C entspricht Luvocell (Handelsname) = L

2. Bezeichnung der Referenz-Filterhilfsmittel (wenn nicht ausgeschrieben):

- Filtercel L (Handelsname) = FC
- Standard Supercel (Handelsname) = SS

Die Filterhilfsmittel Filtercel L und Standard Supercel wurden sowohl isoliert als auch in Mischungen als Referenzmaterial genutzt, um die Eigenschaften der neuen erfindungsgemäßen Filterhilfsmischungen mit in der Industrie genutzten Standards zu vergleichen.

3. Definition der in den Abbildungen verwendeten Bezeichnungen für die prozentuale Zusammensetzung der Filterhilfsmittelmischungen:

- z. B. H70/C25/L5 = 70 % Komponente B/25 % Komponente A/5 % Komponente C
- z. B. FC25/SS75 = 25 % Filtercel L/75 % Standard Supercel

4. Für den experimentellen Teil genutzte Apparaturen:

- Für die Durchlässigkeitsmessungen und die Nassdichtebestimmungen wurde ein Standard-EBC-Messgerät genutzt. Die Messungen der Standard-Durchlässigkeiten und -nassdichten erfolgten mit destilliertem Wasser. Alle anderen Messungen wurden mit Rohbier und einer Menge von 20 g Substanz bei einem Druck von 2 bar durchgeführt.
- Die Filtrationssimulationen wurden wie folgt durchgeführt: die zu filtrierende Flüssigkeit (Suspension) wird über eine Schlauchpumpe mit konstanter Durchflussrate in einen Walton-Filter befördert. Vor der eigentlichen Filtration wird eine Voranschwemmung durchgeführt, bei der die Suspension mit dem Filterhilfsmittel unter Rückfluss des Filtrats solange im Kreis gefahren wird, bis das Filtrat keine Trübung mehr aufweist. Anschließend wird, mit einer etwas geringeren Menge des Filterhilfsmittels in der Suspension, die eigentliche Filtration durchgeführt. Das Filtrat kann dann noch einer Trübungsmessung unterzogen werden.
- Die elektromikroskopischen Untersuchungen und die Röntgenspektroskopie wurden an der Technischen Universität Hamburg-Harburg sowie bei der Firma Böhlken, Hamburg, durchgeführt.

Die Komponente A ist folgenden speziellen Untersuchungen unterzogen worden:

- Teilchenmorphologie
- Teilchendurchmesser
- Porendurchmesser
- Vergleich der Durchlässigkeiten der beiden Qualitäten nach EBC
- REM-Untersuchungen an Komponent A, Filtercel L, Standard Supercel,
- Chemische Analyse der Komponent A-Diatomeen
- Ableitung der Eigenschaften von Komponent A

Die Komponente A1 ist folgenden speziellen Untersuchungen unterzogen worden:

- Teilchenmorphologie
- Teilchendurchmesser
- Porendurchmesser

- FHM-Mischungen mit jeweils 25 % Durchlässigkeit Nassdichte.

In der nachstehenden Tabelle sind die Komponenten A1 und A mit ihren Parametern gegenübergestellt.

|  | Komponent A1/Costalite FN | Komponent A/Celite S |
|---|---|---|
| Teilchenmorphologie | Unregelmäßige Struktur (runde + stabförmige Teilchen, Bruchstücke) | im wesentlichen sphärische Teilchen, auch Bruchstücke |
| Teilchendurchmesser | 10 - 15 $\mu$m | 10 - 25 $\mu$m |
| Porendurchmesser | ca. 200 - 270 nm | ca. 240 - 310 nm |
| FHM-Mischungen mit jeweils 25 % (Messungen mit dest. Wasser): · Durchlässigkeit [Darcy] · Nassdichte [g/l] | 0,075 308 | 0,057 290 |

B. Experimenteller Teil

Vergleich der Durchlässigkeiten (nach EBC-Methode) und Nassdichten mit handelsüblichen Filterhilfsmitteln

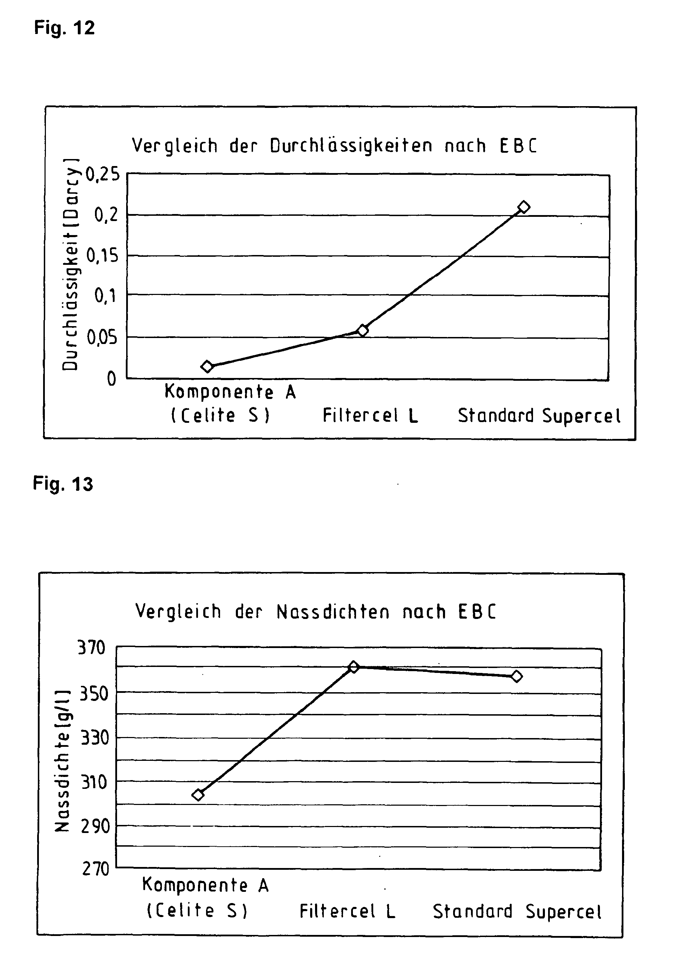

Die Durchlässigkeiten der Qualität von Komponent A wurde nach der EBC-Methode bestimmt und im Vergleich zu üblichen Filterhilfsmittelkomponenten entsprechend Fig. 12 untersucht.
Ebenso wurden die Nassdichten verglichen. Die höhere Nassdichte der Standard-Filterhilfsmittel wird durch die Calcinierung begründet. Im Zuge der thermischen Behandlung bilden sich kristalline Anteile bzw. Kristalle, die aufgrund ihrer erhöhten Regelmäßigkeit dichter packbar sind.

Vergleich der Morphologien der Filterhilfsmittel: Rasterelektronenmikroskopie mit handelsüblichen Filterhilfsmitteln

Um die Eigenschaften des Materials von Komponente A klarer herauszustellen, wurden rasterelektronische Aufnahmen (REM), sowohl von Komponent A, als auch von allen anderen eingesetzten Filterhilfsmitteln angefertigt. In REM-Aufnahmen lassen sich Teilchenmorphologien und -größen vergleichen und somit direkte Rückschlüsse auf die makroskopischen Eigenschaften ziehen.
Eine erste Analyse von Teilchengröße und Morphologie aller untersuchten Substanzen, insbesondere auch der Poren der jeweiligen Materialien, zeigte folgende Übersicht:

|  | Celite S Komponent A | Standard Supercel | Filtercel L |
|---|---|---|---|
| Teilchenübersicht | Regelmäßig, ca. 16 $\mu$m (10-25 $\mu$m) | Unregelmäßig | Unregelmäßig |
| Porendurchmesser | ca. 275 nm (240-310 nm) | ca. 1 $\mu$m | |

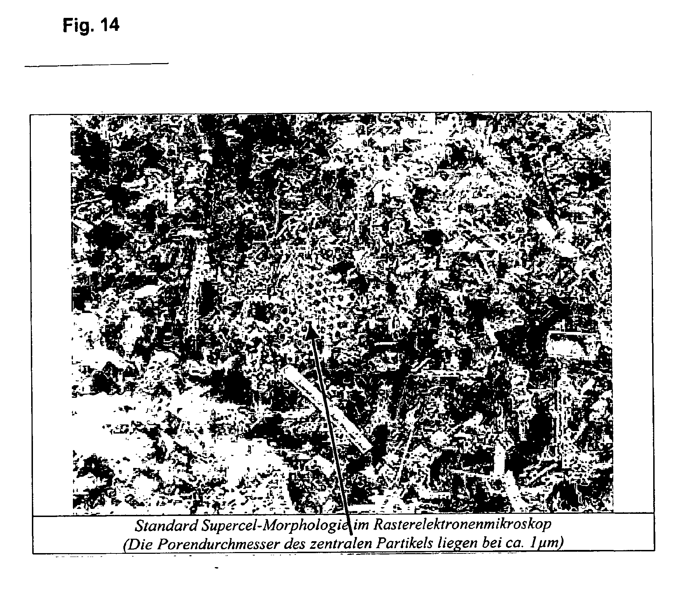

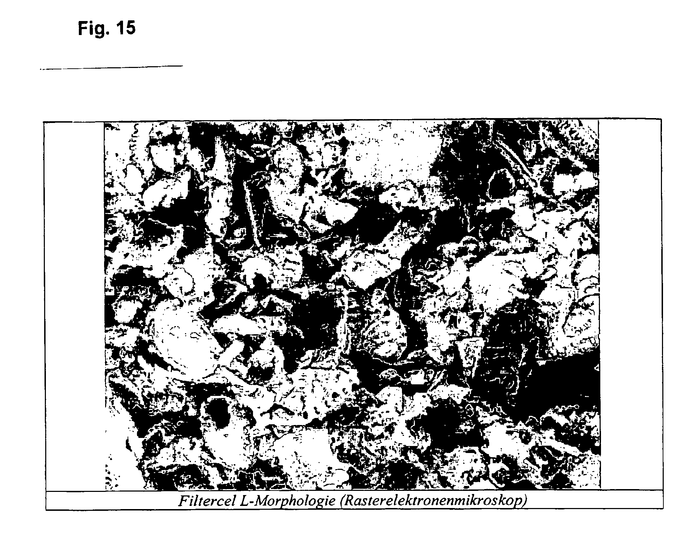

Die Porengröße der Partikel ist bei Komponent A deutlich kleiner als bei den Standard-Filterhilfsmitteln; dies erklärt die deutlich geringere Durchlässigkeit der Komponent A-Materialien im Vergleich zu den Standards (Komponent A: ca. 0,01 D, Standard Supercel: 0,21 D).
Anhand der REM-Aufnahmen zeigt sich außerdem, dass sich die unterschiedlichen Filtrationseigenschaften von Komponente A, Filtercel L und Standard Supercel klar auf die Morphologie zurückführen lässt.
Standard Supercel hat mit 0,21 D die größte Durchlässigkeit, Filtercel L liegt mit ca. 0,057 D in der Mitte, Komponente A besitzt eine Durchlässigkeit von nur 0,01 D. Die Partikelmorphologie kann dies erklären. Standard Supercel besitzt eine sehr unregelmäßige Morphologie mit sehr unterschiedlichen Partikeln (stabförmig, wabenförmig). Die Poren der wabenförmigen Strukturen sind sehr groß und liegen bei durchschnittlich über 1 $\mu$m. Der sehr lockere Aufbau der Standard-Supercel-Morphologie und die Porengröße gemäß Fig. 14 können die hohe Durchlässigkeit des Materials erklären.
Filtercel L weist dagegen eine regelmäßigere Struktur auf; allerdings sind die Teilchen recht locker gepackt und weisen eine großlöchrige und eher plattenartige Struktur auf. Die Teilchengröße liegt im Bereich einiger Mikrometer (Fig. 15).

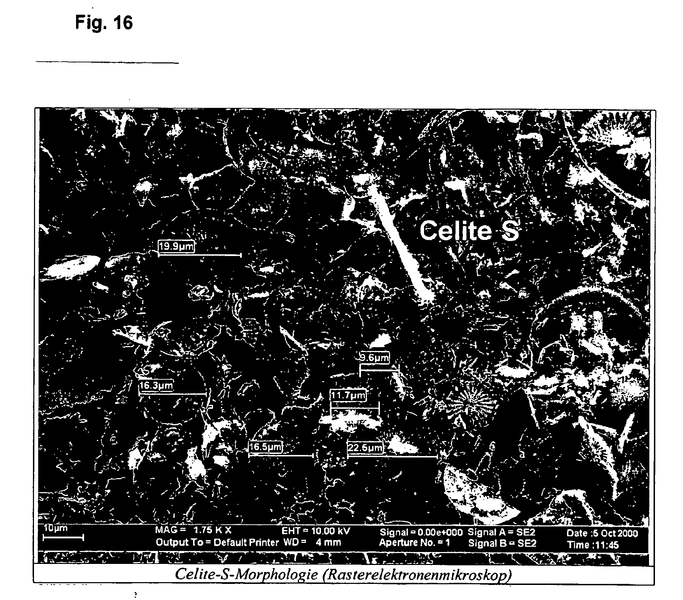

Komponente A dagegen hat eine sehr viel regelmäßigere Morphologie. Man erkennt fast ausschließlich runde scheibenförmige Diatomeen, die einen durchschnittlichen Durchmesser von 10-25 $\mu$m durchschnittlich 16 $\mu$m besitzen. Die Teilchen sind recht dicht gepackt (Fig. 16).

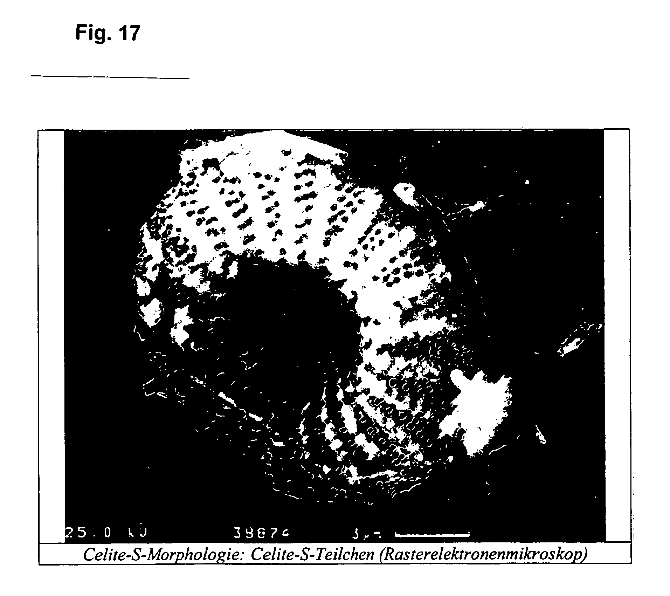

Bei detaillierter Auswertung der Teilchen zeigt sich der wesentliche Unterschied zu den Standard-Filterhilfsmitteln: die Komponente A-Diatomeen zeigen eine ausgeprägte Porenstruktur, jedes der einzelnen scheibenförmigen Diatomeen besitzt eine Vielzahl von Poren und Öffnungen. Die Fig. 17 zeigt ein einzelnes Komponent A-Teilchen mit der charakteristischen dreidimensionalen Struktur und den sehr regelmäßig angeordneten Poren. Diese Porenstruktur erklärt die guten Filtrationseigenschaften der Substanz sowie die relativ geringe Durchlässigkeit von ca. 0,01 Darcy. Die regelmäßige Porenstruktur bewirkt eine Kanalisation der zu filtrierenden Flüssigkeiten, Teilchen, die größer als die Poren sind, werden zurückgehalten.

Diese Poren sind im Vergleich zu Standard Supercel und Filtercel L deutlich kleiner, im Durchschnitt liegt der messbare Porendurchmesser bei ca. 275 nm und damit nur bei einem Viertel der Porendurchmesser, die sich bei den wabenartigen Strukturen des Standard Supercel finden.

Zusätzlich zeigen diese Untersuchungen, dass die regelmäßige und reproduzierbaren Eigenschaften von Komponente A bei den bisherigen Standards Filtercel L und Standard Supercel nicht erreicht wird; diese beiden Substanzen, so zeigen es auch die REM-Aufnahmen, bestehen aus einer Vielzahl verschiedener Diatomeen; diese 'Mischungen' und die fehlende Porenstruktur führt zu deutlich höheren Durchlässigkeiten (Filtercel L: 0,057 Darcy, Standard Supercel: 0,21 Darcy.

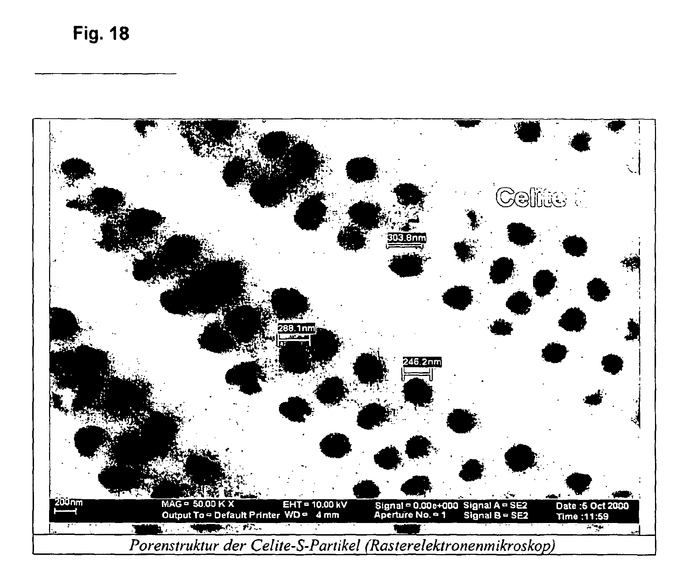

Die Fig. 18 zeigt deutlich die Regelmäßigkeit der Porenstruktur von Komponente A mit der durchschnittlichen Porengröße von ca. 275 nm.

Eine elementareanalytische Untersuchung (Röntgen-Spektroskopie EDAX) während der REM-Untersuchungen zeigt folgendes Ergebnis:

Die Komponente A besteht zum überwiegenden Teil aus Siliziumdioxid $SiO_2$. Zusätzlich ist aber auch ein geringer Anteil des Elementes Aluminium zu finden. Die Anteile der beiden Elemente Si und Al ergeben sich wie folgt:

| | |
|---|---|
| Anteil Si in Komponent A | Si 94 % |
| Anteil Al in Komponent A | Al 6 % |

Offensichtlich befinden sich also auch geringe Mengen an Aluminiumverbindungen in der Komponente A. Da es sich bei der Komponente A um eine natürlich vorkommende Substanz handelt, wird Al mit großer Wahrscheinlichkeit in Form von Alumosilikaten vorliegen.

Dieses zusätzliche aluminiumhaltige mineralische Material ist zusätzlich zur charakteristischen Porenstruktur mit für die Filtrationseigenschaften von Komponente A verantwortlich. Es ist z. B. bekannt, dass bestimmte Alumosilikate organische Moleküle adsorbieren. Dies führt im Rahmen der Bierfiltration zu einem zusätzlichen Kläreffekt.

Danach ergibt sich:

Komponente A zeigt im Vergleich zu anderen in der Filtration verwendeten Kieselguren charakteristische und einmalige Eigenschaften, die die gemessenen Durchlässigkeiten von nur 0,01 Darcy erklären.

Im Gegensatz zu den anderen Filterhilfsmitteln zeigte Komponent A eine regelmäßige Porenstruktur; die Porengröße liegt im Durchschnitt bei ca. 275 nm. Diese charakteristische Porenstruktur hat einen entscheidenden Einfluss auf die Filtrationseigenschaften von Komponent A.

Bevorzugte Ausführungsformen der Erfindung werden nachstehend anhand der Figuren und Beispiele näher erläutert. Er zeigen:

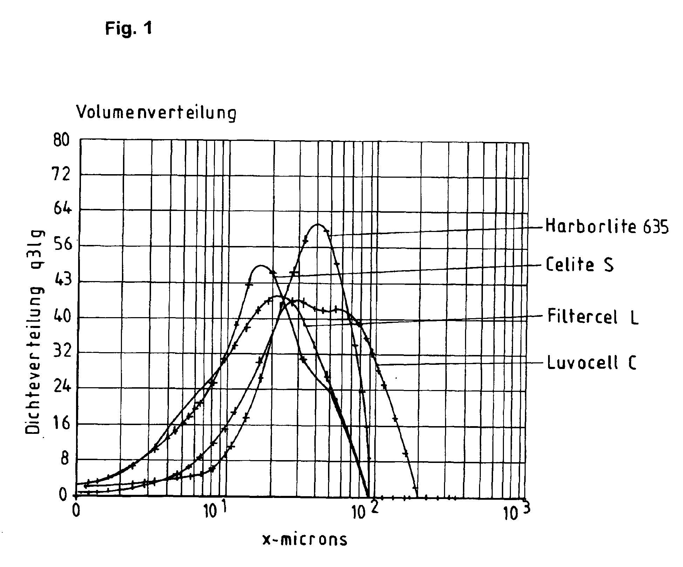

Fig. 1       die Dichte- und Volumenverteilung der Filterhilfsmittel-Komponenten Filtercel L (Vergleichssubstanz), Komponent A Komponent B und Komponent C,

Fig. 2 u. 3       die grafische Darstellung der Ergebnisse einer Untersuchung der Filtrationsleistung erfindungsgemäßer Filterhilfsmittel (H70/C25/L5, H65/C25/L10 und H60/C25/L15) im Vergleich zu einer Vergleichssubstanz (Filtercel L) bei der Filtration von hellem bzw. dunklem Rohbier,

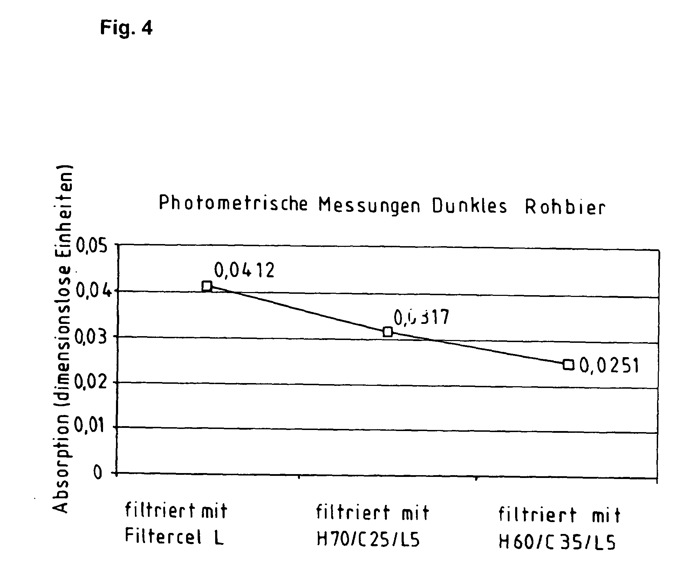

Fig. 4       die grafische Darstellung einer photometrischen Messung von mit erfindungsgemäßen Filterhilfsmitteln (H70/C25/L5, H60/C35/L5) und einer Vergleichssubstanz (Filtercel L) filtriertem dunklen Rohbier (Filtrat),

Fig. 5       die grafische Darstellung der Ergebnisse einer Durchlässigkeitsmessung bei einer Durchflussgeschwindigkeit von 22 hl/hm$^2$ von erfindungsgemäßen Filterhilfsmitteln (H70/C25 /L5, H65/C25/L10 und H60/C25/L15) im Vergleich zu einem Vergleichssubstanzgemisch (Filtercel L und Standard Supercel im Verhältnis 65 % zu 35 %) mit Export-Rohbier,

Fig. 6     die grafische Darstellung der Abhängigkeiten der Durchlässigkeiten von Filterhilfsmittel-Mischungen mit einem Anteil von Celite S,

Fig. 7     die grafische Darstellung einer ermittelten Kürze der Durchlässigkeit von 0,2 Darcy bei einem niedrigen Celite S-Anteil,

Fig. 8     die grafische Darstellung der Durchlässigkeiten von Referenz-Mischungen in Abhängigkeit von einem Filtercel-Anteil,

Fig. 9     die grafische Darstellung einer Voranschwemmung mit destilliertem. Wasser,

Fig. 10     die grafische Darstellung der Filtration von Rohbier mit verschiedenen FHMs,

Fig. 11     die grafische Darstellung von Trübungsmessungen an filtriertem Rohbier,

Fig. 12     die grafische Darstellung eines Vergleiches der Durchlässigkeiten nach EBC,

Fig. 13     die grafische Darstellung eines Vergleiches der Nassdichten nach EBC,

Fig. 14     eine rasterelektronenmikroskopische Wiedergabe vom Aufbau der Standard-Supercel-Morphologie,

Fig. 15     eine rasterelektronenmikroskopische Wiedergabe vom Aufbau der Filtercel L-Morphologie,

Fig. 16     eine rasterelektronenmikroskopische Wiedergabe vom Aufbau der Komponente A-Morphologie,

Fig. 17     eine vergrößerte rasterelektronenmikroskopische Wiedergabe eines Komponente A-Teilchen,

Fig. 18     eine vergrößerte rasterelektronenmikroskopische Wiedergabe der Porenstruktur der Komponente A-Partikel,

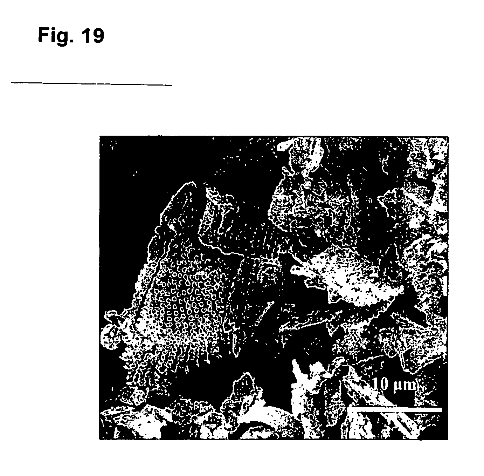

Fig. 19     eine rasterelektronenmikroskopische (REM) Wiedergabe einer Übersicht eines Komponente A1-Teilchen,

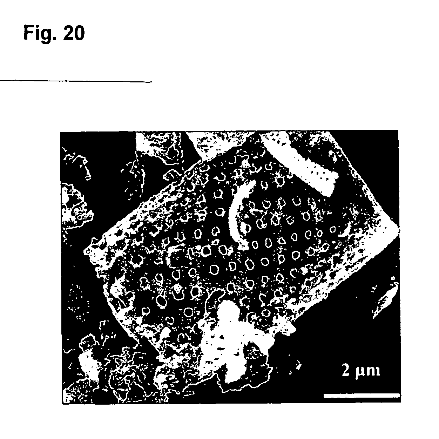

Fig. 20     eine rasterelektronenmikroskopische Wiedergabe eines Komponente A1-Teilchen mit Poren bei einem Teilchendurchmesser von etwa 10 nm,

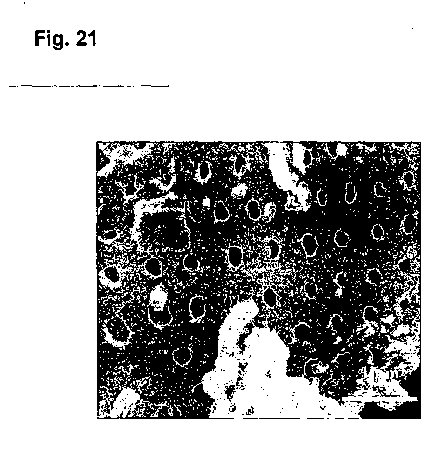

Fig. 21     eine rasterelektronenmikroskopische Wiedergabe der Porenstruktur eines Komponente A1-Teilchens (Porendurchmesser etwa 200 nm).

Beispiele für die neuen FHM-Mischungen

Zunächst wurden die Ausgangssubstanzen untersucht:

a. Filtercel L (Vergleichssubstanz)
Die Bestimmung der Durchlässigkeit (B in Darcy) und der Nassdichte (WD = Wet Densitiy in g/l) mit destilliertem Wasser wurde bei 20 °C und mit 10 g Material bei 2 bar durchgeführt.
Vier Messungen ergaben einen Mittelwert für Filtercel L von B = 0,057 Darcy und WD = 361 g/l. Die Werte der Einzelmessungen sind wie folgt: Messung 1: t (=Zeit) = 145 s, H (=Höhe des Materials) = 1,40 cm, daraus ergibt sich B = 0,049 Darcy, WD = 358 g/l; Messung 2: t = 117,5 s, H = 1,37 cm, daraus ergibt sich B = 0,059 Darcy, WD = 365 g/l; Messung 3: t = 124 s, H = 1,40 cm, daraus ergibt sich B = 0,057 Darcy, WD = 358 g/l; Messung 4: t = 115 s, H = 1,39 cm, daraus ergibt sich B = 0,061 Darcy, WD = 361 g/l.

b. Komponent A (= Celite S; erfindungsgemäße Kieselgur)
Die Bestimmung wurde bei 20 °C und mit 5 g Material bei 2 bar durchgeführt.
Aus t = 327 s und H = 0,70 cm ergibt sich B = 0,0108 Darcy und WD = 361 g/l.

c. Komponent B (= Harborlite 635; Perlite-Komponente)

Die Bestimmung wurde bei 20 °C und mit 20 g Material bei 2 bar durchgeführt.
Aus t = 65 s und H = 3,70 cm ergibt sich B = 0,288 Darcy und WD = 273 g/l.

d. Komponent C (= Luvocell C; Cellulose-Komponente)
Die Bestimmung wurde bei 20 °C und mit 20 g Material bei 0,5 bar durchgeführt.
Aus t = 41 s und H = 3,70 cm ergibt sich B = 1,829 Darcy und WD = 270 g/l.

Aufgrund dieser Daten ist anzunehmen, dass in einem erfindungsgemäßen Filterhilfsmittel mit den Komponenten Celite S ("C"), Luvocell C ("L") und Harborlite 635 ("H") bezüglich der Durchlässigkeit Komponent A der bestimmende Faktor ist, da diese Komponente den geringsten Durchlässigkeitswert (siehe oben) aufweist.

Aufgrund der vorliegenden Daten wird ein theoretisches Mischungsverhältnis berechnet, wobei zu beachten ist, dass sich die Materialhöhen (H = Filterkuchenhöhen) der einzelnen Komponenten addieren. Die Durchlaufzeit wird auf die eingesetzte Menge Komponent A bezogen. Angestrebt wird eine Durchlässigkeit von ca. 0,05 Darcy.

Entsprechende des für Komponent A erhaltenen Durchlässigkeitswertes wird die erforderliche Menge errechnet. Aus den Einzelkomponenten ergibt sich dann eine Filterkuchenhöhe (H) von:

| | | |
|---|---|---|
| Komponent A | 5 g | = 0,7 cm |
| Komponent B | 20 g | = 3,7 cm |
| Komponent C | 20 g | = 3,7 cm |

Es ist Folgendes festzustellen:

1. Der Anteil des erfindungsgemäßen Kieselgur bestimmt im wesentlichen die Durchlaufgeschwindigkeit.
2. Die Komponenten müssen vorab trocken gemischt werden.
3. Als besonders vorteilhaft hat sich ein Anteil der Cellulose-Komponente von bis zu 15 % herausgestellt.
4. Die Filterkuchenhöhe kann für die Einzelkomponenten des erfindungsgemäßen Filterhilfsmittels anteilig gemäß den Beispielen 1 bis 3 berechnet werden.

Des weiteren wurde die Korngrößenverteilung der Komponenten der erfindungsgemäßen Filterhilfsmittel gemessen. Die erfindungsgemäße Kieselgur Komponent A zeigte im Vergleich zu den anderen untersuchten Komponenten die geringste Korngröße. Das Maximum der Volumenverteilung lag bei ca. 16 $\mu$m. Dies deutet darauf hin, dass die Poren von Komponent A durch die anderen Komponenten des erfindungsgemäßen Filterhilfsmittels nicht verschlossen werden und seine vorteilhaften Eigenschaften in dem Filterhilfsmittel erhalten bleiben.

Beispiel 1

Es wurde die Durchlässigkeit und das Filtrationsvermögen von erfindungsgemäßen Filterhilfsmitteln im Vergleich zu Filtercel L (Vergleichssubstanz) bei Rohbier gemessen. Zur Durchführung dieses Versuchs wurde ein EBC-Gerät verwendet. Die erfindungsgemäßen Filterhilfsmittel hatten folgenden Zusammensetzung in %:

H70/C25/L5, H65/C25/L10 bzw. H60/C25/L15

Dieser Versuch ist vergleichbar mit den oben beschriebenen Untersuchungen mit destilliertem Wasser, mit der Ausnahme dass das Rohbier zu Beginn der Messung eine Temperatur von ca. 10 °C hatte.

Zunächst wurde das erfindungsgemäße Filterhilfsmittel bzw. die Vergleichssubstanz mit 450 ml trübem Rohbier versetzt, gerührt und in das EBC-Gerät überführt. Dann erfolgte ein erster Durchlauf bei 2 bar zur Voranschwemmung des Filterkuchens. Das Filtrat wurde dabei wieder zurückgeführt. Nach 5 Minuten bei 2 bar (statisch) wurde die eigentliche Filtration auch bei 2 bar durchgeführt und gleichzeitig die Durchlaufzeit gemessen.

Ergebnisse

a. Visuelle Beurteilung der Trübung: die erfindungsgemäßen Filterhilfsmittel sowie die Vergleichssubstanz enttrübten das Bier; alle Rohbierproben waren nach der Filtration im wesentlichen visuell klar.
b. Durchlässigkeit: die Durchlässigkeit blieb bei allen erfindungsgemäßen Filterhilfsmitteln im Vergleich zu den Wassermessungen im wesentlichen konstant; dagegen sank der Durchlässigkeitswert der Vergleichssubstanz leicht ab

Die Durchlässigkeitswerte sind wie folgt:

| | |
|---|---|
| Filtercel L | 0,041 Darcy |
| H70/C25/L5 | 0,057 Darcy |
| H65/C25/L10 | 0,052 Darcy |
| H60/C25/L15 | 0,054 Darcy |

Diese Ergebnisse zeigen, dass auch bei einer Rohbierfiltration der Anteil von Komponent A die Durchlässigkeitswerte wesentlich beeinflusst. Vorteilhafter Weise ist die Durchlässigkeit der unterschiedlichen erfindungsgemäßen Filterhilfsmittel unabhängig von der zu filtrierenden Flüssigkeit. Die erfindungsgemäßen Filterhilfsmittel können somit ohne spezielle Anpassungen für verschiedene Flüssigkeiten mit gleich bleibenden Ergebnissen verwendet werden. Wird dagegen eine reine Filterkomponente wie Filtercel L verwendet, sinkt der Durchlässigkeitswert bei tatsächlich zu filtrierenden Flüssigkeiten, hier Rohbier, im Vergleich zu Wasser merklich ab.

Die Nassdichte aller vier untersuchten Filterhilfsmittel steigt im Vergleich zur Wassermessung leicht an (von ca. 290 g/l auf ca. 330 g/l). Die Ursache hierfür könnte sein, dass die dem Rohbier entnommenen Substanzen den Filterkuchen zusammenziehen und ihn möglicher Weise verkleben, woraus dann eine höhere Nassdichte als bei Wassermessungen resultiert.

Beispiel 2

Untersuchung der Filtrationsleistung von erfindungsgemäßen Filterhilfsmitteln im Vergleich zu Filtercel L (Vergleichssubstanz).

Es wurde helles und dunkles Rohbier mit verschiedenen erfindungsgemäßen Filterhilfsmitteln (H70/C25/L5, H65/C25/L10, H60/C25/L15) und Filtercel L als Vergleichssubstanz filtriert und das Filtrat in einem Shimadzu Fotometer bei einer Wellenlänge von 650 nm (typische Wellenlänge für eine Trübungsmessung) bei 20 °C gemessen. Aus jeweils drei Messungen wurde der Mittelwert berechnet. Destilliertes Wasser diente als Referenz-Nullpunkt (Absorption = 0,000).

Es wurden folgende Ergebnisse erhalten:

| Bierart/Filterhilfsmittel | Absorption |
|---|---|
| | (Mittelwert aus drei Messungen) |
| Helles Rohbier | 0,121 |
| Helles Rohbier filtriert mit: | |
| Filtercel L | 0,0275 |
| H70/C25/L5 | 0,0188 |
| H65/C25/L10 | 0,0228 |
| H60/C25/L15 | 0,0187 |
| | |
| Dunkles Rohbier | 0,647 |
| Dunkles Rohbier filtriert mit: | |
| Filtercel L | 0,0293 |
| H70/C25/L5 | 0,0260 |

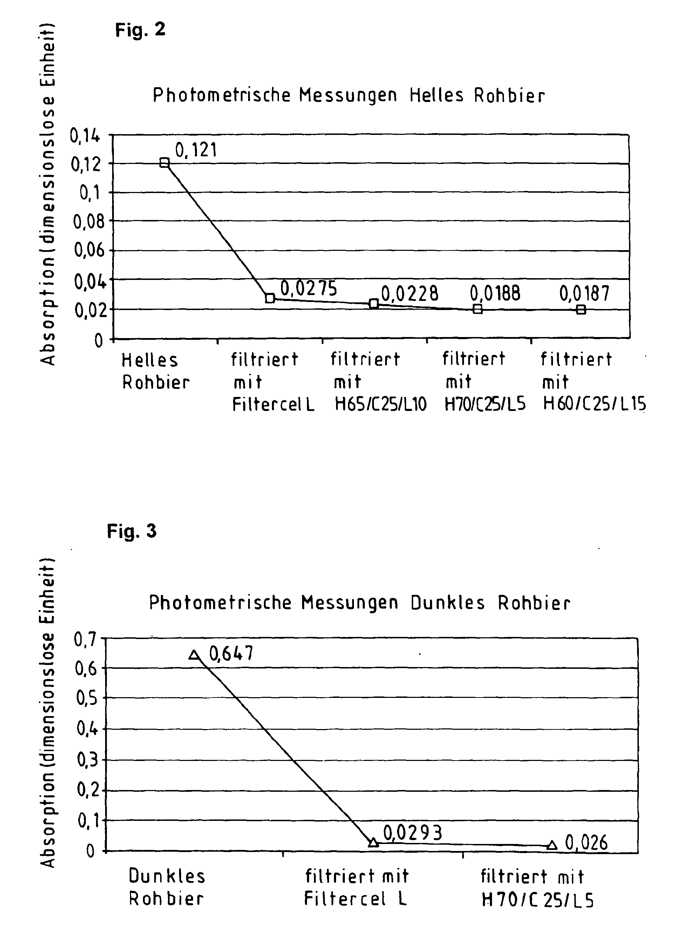

Diese Ergebnisse zeigen, dass die erfindungsgemäßen Filterhilfsmittel gegenüber der Vergleichssubstanz eine bessere Filtrationswirkung haben. Die Daten sind jedoch aussagekräftig, da es sich bei diesen Messungen um einen direkten Vergleich und damit um relative Aussagen handelt. Die Ergebnisse sind zur Verdeutlichung in Fig. 2 und 3 dargestellt.

Beispiel 3

In diesem Versuch wurde ein weiteres erfindungsgemäßes Filterhilfsmittel untersucht, das folgendes Mischungsverhältnis aufweist: H60/C35/L5.

Bei einer Gesamtmenge von 20 g eines erfindungsgemäßen Filterhilfsmittels mit den angegebenen Komponenten ergeben sich theoretisch folgende Filterkuchenhöhen:

| 35 % Komponent A (Celite S) | 5 g = 0,98 cm (aus 7/5 x 0,7 cm) |
|---|---|
| 60 % Komponent B (Harborlite 635) | 12 g = 2,22 cm |
| | (aus 12/20 x 3,7 cm) |
| 5 % Komponent C (Luvocell C) | 1 g = 0,185 cm |
| | (aus 1/20 x 3,7 cm) |

Daraus ergibt sich:

$$H_{gesamt} = 3,385 \text{ cm, } t_{grenz\ (Celite\ S)} = 457,8 \text{ s}$$

$$B = 0,0374 \text{ Darcy (aus } 10,1325 \times 3,385 / 457,8 \times 2)$$

$$WD = 295,4 \text{ g/l (aus } (1000 \times 20) / (20 \times 3,385))$$

Im Versuch (20 g Material bei 2 bar) ergab sich aus zwei Messungen (Messung 1:t = 431,3 s, H = 3,20 cm, daraus ergibt sich B = 0,0375 Darcy und WD = 313 g/l; Messung 2: t = 426 s, H = 3,2 cm, daraus ergibt sich B = 0,038 Darcy und WD = 313 g/l) ein Mittelwert für
B = 0,03775 Darcy
WD = 313 g/l

Diese Ergebnisse zeigen, dass die entwickelten theoretischen Ansätze auch auf andere erfindungsgemäße Filtermaterialien übertragbar sind, die einen relativ hohen Anteil an erfindungsgemäßer Kieselgur enthalten. Bei erhöhten Anteilen der erfindungsgemäßen gebrannten Kieselgur vermindert sich allerdings die Durchlässigkeit etwas.

Eine Rohbiermessung entsprechend Beispiel 2 ergab ähnlich vorteilhafte Ergebnisse. Der für das hier untersuchte erfindungsgemäße Filterhilfsmittel erhaltene Durchlässigkeitswert blieb auch hier im Vergleich zu einer Messung mit destilliertem Wasser im wesentlichen konstant. Der erhaltene Wert für die Durchlässigkeit beträgt 0,036 Darcy und für die Nassdichte 323 g/l.

Diese Ergebnisse belegen, dass auch bei erfindungsgemäßen Filterhilfsmitteln mit einem relativ hohen Anteil an erfindungsgemäßer Kieselgur die Durchlässigkeit und die Nassdichte im wesentlichen unabhängig von der zu filtrierenden Flüssigkeit sind.

Diese Eigenschaft der erfindungsgemäßen Filterhilfsmittel ist deshalb so vorteilhaft, weil sich mit einfach durchzuführenden Wassermessungen im Labormaßstab zuverlässige Aussagen hinsichtlich des Verhaltens der erfindungsgemäßen Filterhilfsmittel bei ihrem tatsächlichen späteren Einsatz machen lassen.

Beispiel 4

Untersuchung erfindungsgemäßer Filterhilfsmittel ohne eine Cellulose-Komponente.

Da die Cellulose-Komponente den teuersten Bestandteil in den erfindungsgemäßen Filterhilfsmitteln darstellt, wurde getestet, ob auch erfindungsgemäße Filterhilfsmittel ohne diese Komponente gute Eigenschaften aufweisen.

Es wurden zwei Filterhilfsmittel untersucht, die in ihrer prozentualen Zusammensetzung hinsichtlich der gebrannten Kieselgur den bisher untersuchten erfindungsgemäßen Filterhilfsmitteln im wesentlichen nahe kommen.

Folgende erfindungsgemäße Filterhilfsmittel wurden untersucht:

    a. 25 % (= 5 g) Celite S, 75 % (= 15 g) Harborlite 635 (H75/C25)

Die Ergebnisse zeigen, dass die Durchlässigkeitswerte der erfindungsgemäßen Filterhilfsmittel ohne Cellulose-Komponente im Vergleich zu den untersuchten Filterhilfsmitteln mit Cellulose-Komponente abnehmen. Die Nassdichtewerte sind allerdings in allen untersuchten erfindungsgemäßen Filterhilfsmitteln vergleichbar und bleiben trotz Fehlen der Cellulose-Komponente im wesentlichen konstant.

Die visuelle Analyse des Filterkuchens zeigte keine wesentlichen Unterschiede zu denjenigen mit Cellulose-Komponente; alle untersuchten Filterkuchen aus erfindungsgemäßen Filterhilfsmitteln behielten nach der Entnahme aus dem EBC-Gerät ihre Form und zerfielen nicht.

Der Cellulose-Komponente kommt möglicher Weise eine zusätzliche Stütz- oder/und Verteilungsfunktion in den erfindungsgemäßen Filterhilfsmitteln zu. Ihr Fehlen vermindert die guten Leistungsmerkmale der erfindungsgemäßen Filterhilfsmittel jedoch nicht wesentlich.

Aus den vorangegangenen Beispielen zeigt sich, dass die erfindungsgemäßen Filterhilfsmittel im Vergleich zu üblichen Filterhilfsmitteln (Filtercel L) vergleichbare oder sogar überlegene Leistungen aufweisen und in einem vorteilhaften Preisrahmen liegen.

Beispiel 5

In diesem Versuch wurde ein mit Praxisbedingungen vergleichbarer Filtrationsvorgang simuliert.

Die zu filtrierende Flüssigkeit (Suspension 1) wird über eine Schlauchpumpe 2 mit konstanter Durchflussrate in den Filter 3 (Walton-Filter) mit dem Filterhilfsmittel befördert. Vor der eigentlichen Filtration wird eine Voranschwemmung durchgeführt, bei der die Suspension 1 mit dem Filterhilfsmittel unter Rückfluss des Filtrats solange rezirkuliert wird, bis das Filtrat keine Trübung mehr aufweist. Anschließend wird mit einer etwas geringeren Menge des Filterhilfsmittels in der Suspension die eigentliche Filtration durchgeführt. Das Filtrat kann zur Kontrolle, gegebenenfalls in regelmäßigen Abständen, einer Trübungsmessung unterzogen werden.

Es wurden verschiedene erfindungsgemäße Filterhilfsmittel (H70/C25/L5, H60/C25/L15, H65/C25/L10, H70/C39, H80/C20, H90/C10) und ein Vergleichsfiltermittelgemisch (Filtercel L und Standard Supercel (65 % und 35 %)) untersucht. Dieses Vergleichsfiltermittelgemisch entspricht im wesentlichen bekannten in der Praxis verwendeten Filterhilfsmitteln. Z. B. sind Filterhiftsmittel mit einem Anteil von ca. 61 % Filtercel L bekannt, die breite Anwendungen finden.

Dem Versuch wurden folgende Bezugsgrößen zugrunde gelegt:

a. für die Voranschwemmung 700 g/m$^2$ Filterhilfsmittel,
b. für den Filtrationsvorgang 500 g/m$^2$ und
c. als Filterfläche 25,5 cm$^2$

Aus diesen Versuchsbedingungen ergeben sich die folgenden Versuchsparameter:

a. Voranschwemmung: (700 g / 10 000 cm$^2$) x 25,5 cm$^2$ = 1,79 g Filterhilfsmittel
b. Filtration: (500 g / 10 000 cm$^2$) x 25,5 cm$^2$ = 1,28 g Filterhilfsmittel

Aus praktischen Gründen wurde in dem Versuchsaufbau eine Durchlaufgeschwindigkeit von $v_{Versuch}$ = 1,54 ml/s gewählt, obwohl sie in der Brauereipraxis bei $v_{Praxis}$ = 3 bis 5 hl/hm$^2$ liegt.

Damit errechnen sich die Durchflussgeschwindigkeiten auf den technischen Maßstab der Praxis $v_{Praxis}$ wie folgt:

$$v_{Praxis} = (1,54 \text{ ml/s} / 25,5 \text{ cm}^2) \times 10\,000 \text{ cm}^2 = 604 \text{ ml/s}$$

$$= 0,61 \text{ l/sm}^2$$

$$= 21,6 \text{ hl/hm}^2$$

Beispiel 6

Ergebnisse von Messungen mit Rohbier

In diesem Teilversuch wurden die Messungen mit Export-Rohbier mit dem oben genannten Vergleichsfiltermittelgemisch (Filtercel L/Standard Supercel 65/35) und den erfindungsgemäßen Filterhilfsmitteln H70/C25/L5, H65/C25/L10 und H60/C25/L15 durchgeführt.

Das Export-Rohbier hatte 12 % Stammwürze und 4 % Alkohol. Die Voranschwemmung wurde unter den oben genannten Bedingungen mit destilliertem Wasser durchgeführt.

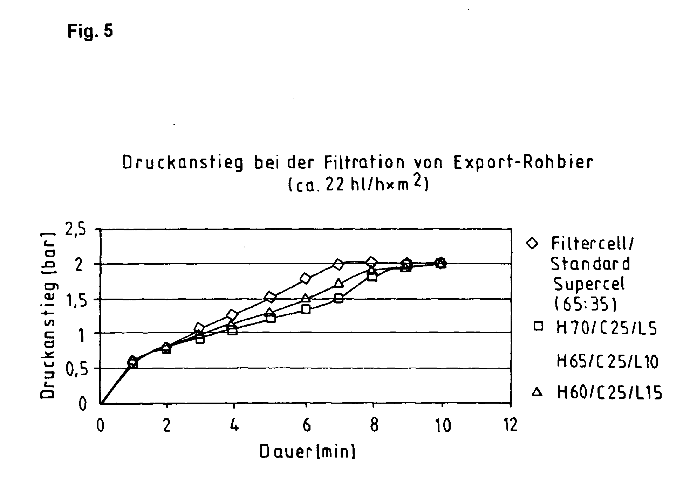

Die in Fig. 5 grafisch dargestellten Ergebnisse zeigen, dass auch mit einer tatsächlich zu filtrierender Flüssigkeit der Druckanstieg bei den erfindungsgemäßen Filterhilfsmitteln niedriger liegt als bei dem Vergleichsfiltermittelgemisch. Damit können die erfindungsgemäßen Filterhilfsmittel länger eingesetzt werden als vergleichbare bekannte Filterhilfsmittel. Dadurch wird weniger Filterhilfsmittel benötigt und der Einsatz von Personal kann verringert werden, da das Filterhilfsmittel nicht so häufig erneuert werden muss, wodurch die Kosten deutlich gesenkt werden können.

Weiterhin zeigten die aus dieser Filtration erhaltenen Filtrate in einer Trübungsmessung bei Bier mit unterhalb 10° C liegenden Temperaturen keine sichtbare Trübung mehr. Es wurden Trübungswerte für die mit den erfindungsgemäßen Filterhilfsmitteln filtrierten Proben von ca. 2 bis 3 FTU (= 0,5 bis 0,75 EBC) erhalten. Diese Werte liegen leicht unter bzw. sind vergleichbar mit den Werten, die mit dem Vergleichsfiltermittelgemisch erhalten wurden.

Beispiel 7

Der bisherige Standard Filtercel L wird in der Brauereiindustrie immer mehr abgelöst durch die Substanz Standard Supercel. Da die Substanz Standard Supercel eine deutlich höhere Durchlässigkeit besitzt als Filtercel L, sind auch andere Mischungsverhältnisse untersucht worden, z. B. Mischungen aus Standard Supercel und Filtercel.

Standard Supercel besitzt eine gemessene Durchlässigkeit von:

$$B = 0{,}21 \text{ Darcy}$$

sowie eine Nassdichte von

$$WD = 357 \text{ g/l.}$$

Die Durchlässigkeiten der neuen Mischungen sollten also, auf Basis dieser Referenz, bei ca. 0,2 Darcy liegen.

Es wurden somit neue Mischungsverhältnisse ausgewählt, die im Bereich von 0,75 bis 6,5 % Komponent A-Anteil lagen.

Im Vergleich mit den bisherigen Ergebnissen zeigt sich eine interessante Tendenz. Die Durchlässigkeiten der Mischungen aus den Komponenten A, B und C zeigen nur bei höheren Komponenten A-Anteilen ein lineares Verhalten. Bei kleineren Anteilen der eigentlichen Filtrationskomponente Komponent A kommt es zu einem potenziellen Anstieg der B-Werte. Die Durchlässigkeiten nähern sich also hier dem Wert des Harborlite 635 mit 0,29 Darcy an.

Ursache hierfür könnte sein, dass ab dem Unterschreiten einer gewissen Konzentration von Komponent A diese kaum mehr eine Filtrationswirkung zeigt, weil möglicherweise die Komponente A-Partikel in der Cellulose oder in den Harborlite-Partikeln inkorporiert werden. Die Korngrößenverteilung zeigte zwar, dass die Komponente A-Partikel kleiner sind als die Partikel der übrigen Mischungsbestandteile und deswegen nicht durch diese verstopft werden können. Da die Komponent A-Partikel aber kleiner sind, kann ihre Wirkung bei geringen Anteilen allerdings durch die anderen Bestandteile geschluckt werden.

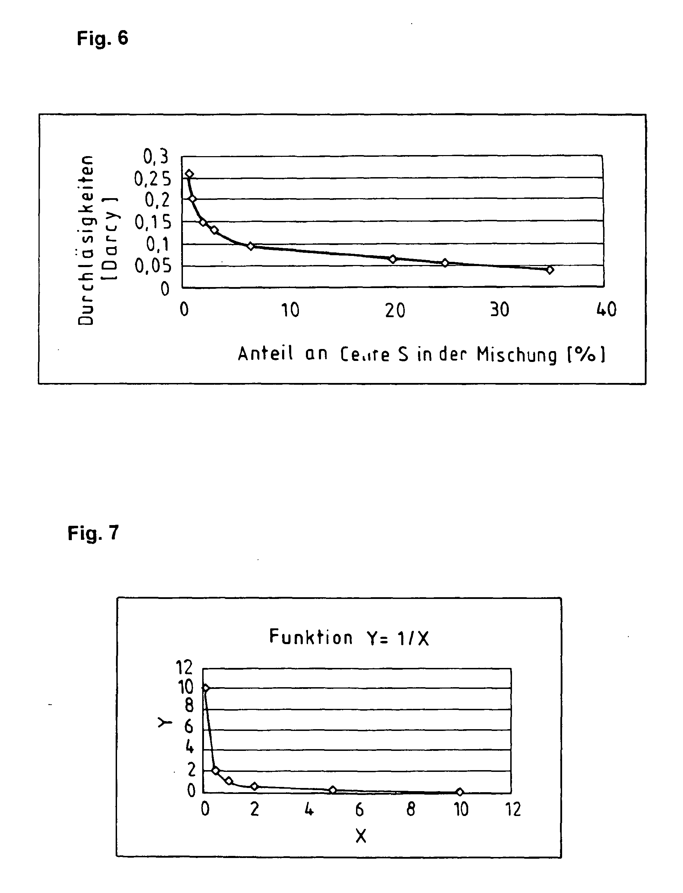

Die Grafik in Fig. 6 zeigt die Abhängigkeit der Durchlässigkeiten der neuen Mischungen vom Komponent A-Anteil.

Interessant ist, dass die experimentell ermittelte Kurve vergleichbar einer Funktion ist, also einem hyberbolischen Verlauf gemäß Fig. 7 entspricht.

Anhand der ermittelten Kurve lässt sich also ableiten, dass eine Durchlässigkeit von ca. 0,2 Darcy bei einem Celite S-Anteil von ca. 1 % erreicht wird.

Beispiel 8

Durchlässigkeiten der Referenzmischungen

In der Praxis zeigt sich, dass Filtercel L als Feingur alleine kaum mehr zum Einsatz kommt. Es wird vielmehr in Mischungen mit Standard Supercel verwendet. Dabei schwankt die prozentuale Verteilung je nach Einsatzgebiet.

Im Folgenden wurde untersucht, wie sich die Durchlässigkeiten B in Abhängigkeit vom Filtercel L-Anteil in Referenzmischungen verändern.

Die Einzelwerte der Durchlässigkeiten sind Folgende:

- Filtercel L:      B = 0,057 Darcy
- Standard Supercel:      B = 0,21 Darcy

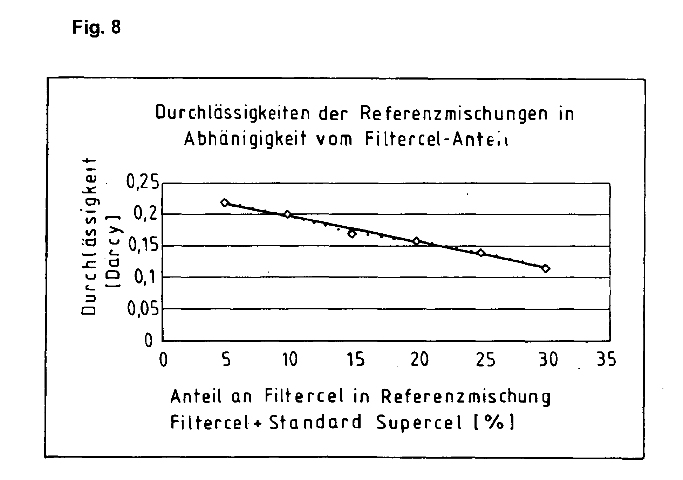

Die Untersuchung verschiedener Mischungen ergibt sich aus Fig. 8. Hier zeigt sich, dass bei geringen Anteilen an Filtercel L die Durchlässigkeit durch das Standard Supercel bestimmt wird; erst ab einem Anteil von ca. 15 % Filtercel sinkt der B-Wert signifikant.

Weiterführende Untersuchungen, die im Folgenden beschrieben werden, zeigen, dass die erfindungsgemäßen Filterhilfsmittelmischungen mit einem Komponent A-Anteil von 5-20 % den Referenzmischungen entsprechen, in denen 20-30 % Filtercel vorhanden sind.

Beispiel 9

Erfindungsgemäße Filterhilfsmittelmischungen mit Komponente A aus Basis praxisorientiert erweiterter Referenzmischungen

Auf Basis einer erweiterten Referenzmischung, die die aktuell industrielle Praxis widerspiegelt, wurden an verschiedenen Filterhilfsmittelmischungen, die die Komponenten A, B und C enthielten, weitere Untersuchungen durchgeführt.

Als Referenz wurde eine Mischung aus 25 % Filtercel L (FC) und 75 % Standard Supercel (SS) verwendet, die ermittelte Durchlässigkeit liegt bei ca. 0,14 Darcy.

Für erfindungsgemäße Filterhilfsmittelmischungen, deren Komponent A-Anteil zwischen 5 und 20 % lag, ergaben sich ähnliche Durchlässigkeitswerte.

Mit diesen Mischungen wurden nun in der Filtrationssimulation (Walton-Filter) Bierfiltrationsversuche durchgeführt und die Trübungswerte gemessen.

Die Filtrationssimulation bestand, wie bereits oben beschrieben aus einer Voranschwemmung und einem Filtrationsdurchlauf; die Durchlaufgeschwindigkeit in der Apparatur betrug (aus technischen Gründen) ca. 2,71 ml/s (dies entspricht ca. 38 hl/h*m$^2$). Die Voranschwemmung wurde mit destilliertem. Wasser durchgeführt, bei der Filtration wurde Rohbier (Pilsener) verwendet.

Untersucht wurden folgende Filterhilfsmittelmischungen:

- FC25/SS75 (25 % Filtercel, 75 % Standard Supercel), Referenzmischung
- H80/C15/L5 (80 % Komponente B = Harborlite 635; 15 % Komponente A = Celite S; 5 % Komponente C = Luvocell C)
- H85/C10/L5 (85 % Komponente B = Harborlite 635; 10 % Komponente A = Celite S; 5 % Komponente C = Luvocell C)
- H90/C5/L5 (90 % Komponente B = Harborlite 635; 5 % Komponente A = Celite S; 5 % Komponente C = Luvocell C)

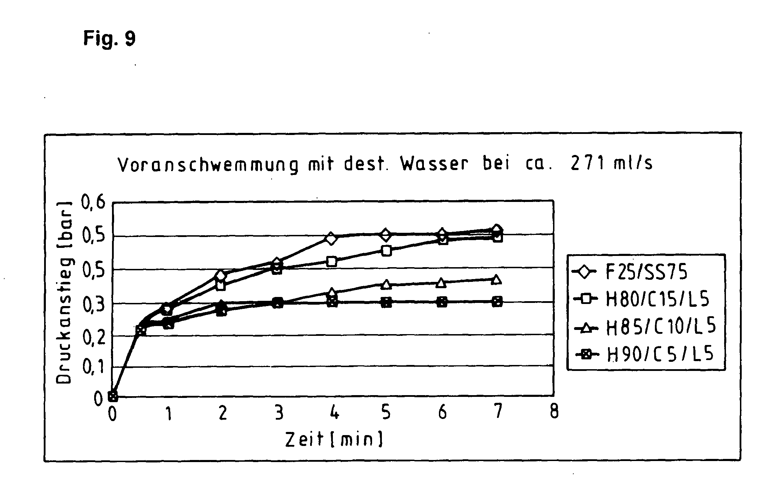

Für die Voranschwemmung ergibt sich die Grafik nach Fig. 9. Hier zeigt sich bereits, dass ein Komponent A-Anteil von 15 % in der Mischung einen ähnlichen Druckanstieg und damit Kurvenverlauf bewirkt, wie die Referenzmischung.

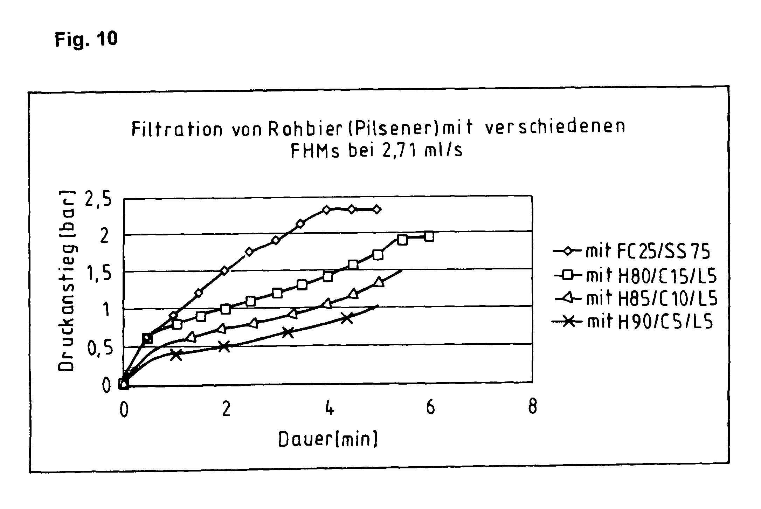

Bei der eigentlichen Filtration von Rohbier zeigen alle erfindungsgemäßen Filterhilfsmittelmischungen einen geringeren Druckanstieg als die Referenzmischung, die Mischung mit 15 % Komponent A liegt der Referenz gemäß Fig. 10 am nächsten.

Hieraus ergibt sich, dass unter den gegebenen Verhältnissen eine Mischung mit einem Komponent A-Anteil von um die 15 % sich als vernünftiges Äquivalent zu den Filtercel-haltigen Mischungen erweisen kann; dabei kann die Spanne des Komponent A-Anteils durchaus zwischen 10 und 20 % liegen.

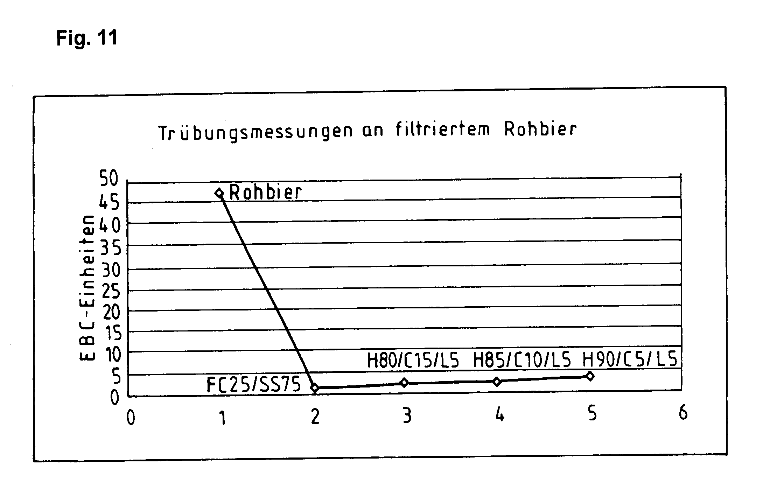

Dies belegen auch die am filtrierten Bier durchgeführten Trübungsmessungen gemäß Fig. 11 mit dem Messgerät HANNA HI 93703.

Hier zeigt sich, dass die mit den erfindungsgemäßen Filterhilfsmittelmischungen filtrierten Bierproben vergleichbare Trübungswerte ergeben wie das mit der Referenz filtrierte Bier. Alle Biere waren nach visueller Beurteilung direkt nach der Filtration klar, enthielten also keine sichtbare Trübung mehr.

Die mit dem Messgerät erhaltenen FTU-Werte wurden in EBC-Einheiten umgerechnet (1 FTU = 0,25 EBC).

Die erfindungsgemäßen Filterhilfsmittelmischungen mit einem Anteil der Filtrationskomponente Komponent A von 5-15 % zeigen also vergleichbare Eigenschaften bei der Bierfiltration wie entsprechende aktuell in der Praxis verwendete Mischungen auf Filtercel- und Standard-Supercel-Basis.

Möglicherweise weisen die neuen FHMs in der Praxis sogar ein deutlich besseres Verhalten auf, da die gemessenen Druckanstiege bei der Bierfiltration niedriger als bei der Referenzmischung sind. Dies könnte auf eine längere Verwendbarkeit im Prozess hindeuten, die FHMs setzen sich nicht so schnell zu.

Somit ergibt sich zusammenfassend:

- Im Bezug zur Referenzsubstanz Filtercel L lassen sich neue erfindungsgemäße Filterhilfsmittelmischungen mit einem optimalen Anteil von 25 % Komponent A herstellen, die vergleichbare Durchlässigkeitswerte sowie Druckanstiegskurven bei der Filtration von Rohbier aufweisen; Trübungsmessungen ergeben sogar etwas bessere, also geringere Trübungen im Vergleich zur Referenz
- im Bezug zu Referenzmischungen aus Filtercel L 25 % und Standard Supercel 75 % lassen sich neue Filterhilfsmittelmischungen herstellen, die einen Komponent A-Anteil zwischen 5 und 20 % besitzen. Die Durchlässigkeitswerte sowie die Ergebnisse der Trübungsmessungen sind mit denen der Referenzmischungen vergleichbar; die Druckanstiegskurven bei der Bierfiltration liegen unterhalb der Kurven der Referenz; dies deutet möglicherweise auf eine längere Prozessbeständigkeit hin.

Beispiel 10

Beurteilung der Biertrübung einer die Komponente A1 (Costalite FN) enthaltene Filterhilfsmittelmischung nach Filtration

Eine Filterhilfsmittelmischung mit 25 % Costalite FN wurde zur Filtration von Rohbier eingesetzt, als Vergleich dazu dienen Werte, die sich bei der Filtration von Rohbier mit einer Celite-S-haltigen Filterhilfsmittelmischung ergaben (25 % Celite S).

Die Filtration erfolgte im EBC-Gerät und wurde unter Standardbedingungen durchgeführt (T = 20° C, p = 2 bar, $T_{Rohbier}$ = 5° C).

Die visuelle Prüfung der Biertrübung erfolgte sowohl nach dem Anschwemmdurchlauf, als auch nach der eigentlichen Filtration, bei der auch Durchlässigkeit und Nassdichte bestimmt wurden.

Ergebnisse der Filtration mit Bier:

| | FHM-Mischung 70 % H635 (franz) 25 % Costalite FN 5 % Luvocell C | FHM-Mischung 70 % H635 (franz) 25 % Celite S 5 % Luvocell C |
|---|---|---|
| Durchlässigkeit [Darcy] | 0,052 | 0,058 |
| Nassdichte [g/l] | 347 | 324 |
| Visuelle Beurteilung der Biertrübung (Anschwemmdurchlauf) | klar | klar |
| Visuelle Beurteilung der Biertrübung (Filtration) | klar | klar |

Danach besitzt die Mischung mit Costalite FN auch bei der Filtration von Rohbier vergleichbare Eigenschaften wie die Mischung mit Celite S. Die Durchlässigkeiten der beiden Mischungen im Vergleich nähern sich sogar noch an, da die Durchlässigkeit der Costalite-Mischung bei Messungen mit destilliertem Wasser bei über 0,070 Darcy liegen (siehe oben). Costalite FN stellt somit eine zu Celite S vergleichbare Filtrationskomponente dar, so dass die Möglichkeit besteht, in Mischungen mit Celite S auch Costalite FN einzusetzen.

Alle %-Angaben erfolgen in Gewichts-%.

**Patentansprüche**

1. Filterhilfsmittel,
   **dadurch gekennzeichnet,**
   **dass** das Filterhilfsmittel eine Mischung aus folgenden Komponenten enthält:

   - als Komponente A eine im wesentlichen cristobalitfreie, getrocknete und keiner Calcinierung unterworfene, auf Diatomeenerde mit einem Teilchendurchmesser von im Wesentlichen 10 $\mu$m bis 25 $\mu$m basierende Kieselgur mit einer hohen regelmäßigen Porenstruktur und -anordnung von etwa 240 nm bis 310 nm, bevorzugterweise 275 nm Durchmesser mit einem Anteil von 5 % bis 35 % in der Filterhilfsmittelmischung und/oder
   - als Komponente A1 eine im wesentlichen cristobalitfreie, getrocknete und keiner Calcinierung unterworfene, auf Diatomeenerde mit einem Teilchendurchmesser von im wesentlichen 10 $\mu$m bis 15 $\mu$m basierenden Kieselgur mit einer hohen regelmäßigen Porenstruktur und -anordnung von etwa 200 nm bis 270 nm Durchmesser mit einem Anteil von 5 % bis 35 % in der Filterhilfsmittelmischung,
   - als Komponente B Perlite aus vulkanischen Obsidiangestein durch thermische Expansion hergestellt und im Wesentlichen aus Aluminiumsilikat bestehend, mit einer Kugelfragment-Struktur mit einer vom filigranen Skelett der Diatomeen abweichenden Porosität,

2. Filterhilfsmittel nach Anspruch 1,
   **dadurch gekennzeichnet,**
   **dass** die Filterhilfsmittelmischung als weitere Komponente C eine hochreine, weiße, geruchslose Cellulose enthält.

3. Filterhilfsmittel nach Anspruch 1,
   **dadurch gekennzeichnet,**
   **dass** die Filterhilfsmittelmischung als Komponente B Perlite aus vulkanischen Obsidiangestein durch thermische Expansion hergestellt und im Wesentlichen aus Aluminiumsilikat bestehend, mit einer Kugelfragment-Struktur mit einer vom filigranen Skelett der Diatomeen abweichenden Porosität mit einem Anteil von 50 bis 95 % enthält.

**4.** Filterhilfsmittel nach Anspruch 1,
**dadurch gekennzeichnet,**
**dass** die Filterhilfsmittelmischung als Komponente C eine hochreine, weiße, geruchslose Cellulose mit einem Anteil von 5 bis 20 % enthält.

**5.** Verwendung des Filterhilfsmittels nach einem der Ansprüche 1 bis 4 in der Lebensmittelindustrie und bei der Getränkeherstellung zur Verbesserung der Filtrationseigenschaften.


**Claims**

**1.** Filter aid
**characterized in**
**that** the filter aid contains a mixture of the following components:

- as component A a kieselguhr substantially cristobalite-free, dried and subject to no calcination, based on diatom earth with a particle diameter of substantially 10 $\mu$m to 25 $\mu$m with a high regular pore structure and arrangement of approximately 240 nm to 310 nm, preferably with a diameter of 275 nm with a percentage of 5% to 35% in the filter aid mixture and/or
- as component A1 a kieselguhr substantially cristobalite-free, dried and subject to no calcination, based on diatom earth with a particle diameter of substantially 10 $\mu$m to 15 $\mu$m with a high regular pore structure and arrangement of approximately 200 nm to 270 nm with a percentage of 5% to 35% in the filter aid mixture
- as component B perlite of volcanic obsidian rock produced by thermal expansion and made substantially of aluminium silicate with a spherical fragment structure with a porosity different from the filigrane skeleton of the diatom earth.

**2.** Filter aid according to claim 1,
**characterized in**
**that** the filter aid mixture contains as further component C a white high-purity odourless cellulose.

**3.** Filter aid according to claim 1,
**characterized in**
**that** the filter aid mixture contains as component B perlite of volcanic obsidian rock produced by thermal expansion and made substantially of aluminium silicate with a spherical fragment structure with a porosity different from the filigrane skeleton of the diatom earth with a percentage of 50 to 95 %.

**4.** Filter aid according to claim 1,
**characterized in**
**that** the filter aid mixture contains as component C a white high-purity odourless cellulose with a percentage of 5 to 20 %.

**5.** Use of the filter aid according to any of the claims 1 to 4 in the food industry and for the drinks production for improving the filtration properties.


**Revendications**

**1.** Adjuvant de filtration
**caractérisé en ce**
**que** l'adjuvant de filtration contient un mélange des composants suivants :

- comme composant A un kieselguhr substantiellement exempt de cristoballite, séché et soumis à aucune calcination, basé sur de la terre de diatomée avec un diamètre de particules de substantiellement 10 $\mu$m à 25 $\mu$m avec une grande structure et disposition régulière des pores d'environ 240 nm à 310 nm, de préférence de 275 nm de diamètre avec un pourcentage de 5% à 35% dans le mélange d'adjuvant de filtration et/ou

- comme composant A1 un kieselguhr substantiellement exempt de cristoballite, séché et soumis à aucune calcination, basé sur de la terre de diatomée avec un diamètre de particules de substantiellement 10 μm à 15 μm avec une grande structure et disposition régulière des pores d'environ 200 nm à 270 nm de diamètre avec un pourcentage de 5% à 35% dans le mélange d'adjuvant de filtration

- comme composant B de la perlite en obsidienne volcanique fabriquée par expansion thermique et constitué essentiellement de silicate d'aluminium avec une structure de fragments de billes avec une porosité différente du squelette filigrane de la diatomée.

2. Adjuvant de filtration selon la revendication 1,
   **caractérisé en ce**
   **que** le mélange d'adjuvant de filtration contient comme composant supplémentaire C une cellulose blanche sans odeur de grande pureté.

3. Adjuvant de filtration selon la revendication 1,
   **caractérisé en ce**
   **que** le mélange d'adjuvant de filtration contient comme composant B de la perlite en obsidienne volcanique fabriquée par expansion thermique et constituée essentiellement de silicate d'aluminium avec une structure de fragments de billes avec une porosité différente du squelette filigrane de la diatomée avec un pourcentage de 50 à 95 %.

4. Adjuvant de filtration selon la revendication 1,
   **caractérisé en ce**
   **que** le mélange d'adjuvant de filtration contient comme composant C une cellulose blanche sans odeur de grande pureté avec un pourcentage de 5 à 20 %.

5. Utilisation de l'adjuvant de filtration selon l'une des revendications 1 à 4 dans l'industrie alimentaire et pour la fabrication de boissons pour améliorer les propriétés de filtration.

**Fig. 1**

Volumenverteilung

Harborlite 635
Celite S
Filtercel L
Luvocell C

**Fig. 2**

Photometrische Messungen Helles Rohbier

**Fig. 3**

Photometrische Messungen Dunkles Rohbier

**Fig. 4**

Photometrische Messungen Dunkles Rohbier

(Absorption (dimensionslose Einheiten) vs. filtriert mit Filtercel L, filtriert mit H70/C25/L5, filtriert mit H60/C35/L5)

0,0412  0,0317  0,0251

**Fig. 5**

Druckanstieg bei der Filtration von Export-Rohbier
(ca. 22 hl/h×m$^2$)

◇ Filtercell/
Standard
Supercel
(65:35)

□ H70/C25/L5

H65/C25/L10

△ H60/C25/L15

**Fig. 6**

Durchlässigkeiten [Darcy]

Anteil an Ce..re S in der Mischung [%]

**Fig. 7**

Funktion Y= 1/X

**Fig. 8**

Durchlässigkeiten der Referenzmischungen in
Abhänigigkeit vom Filtercel-Anteil

Anteil an Filtercel in Referenzmischung
Filtercel + Standard Supercel [%]

**Fig. 9**

EP 1 230 976 B1

Voranschwemmung mit dest. Wasser bei ca. 271 ml/s

Druckanstieg [bar]

Zeit [min]

◇ F 25/SS 75
□ H 80/C 15/L 5
△ H 85/C 10/L 5
⊞ H 90/C 5/L 5

**Fig. 10**

Filtration von Rohbier (Pilsener) mit verschiedenen FHMs bei 2,71 ml/s

- mit FC 25/SS 75
- mit H 80/C 15/L 5
- mit H 85/C 10/L 5
- mit H 90/C 5/L 5

Druckanstieg [bar]

Dauer [min]

EP 1 230 976 B1

**Fig. 11**

Trübungsmessungen an filtriertem Rohbier

Rohbier

FC25/SS75　H80/C15/L5　H85/C10/L5　H90/C5/L5

EBC-Einheiten

EP 1 230 976 B1

**Fig. 12**

Vergleich der Durchlässigkeiten nach EBC

Komponente A (Celite S)   Filtercel L   Standard Supercel

**Fig. 13**

Vergleich der Nassdichten nach EBC

Komponente A (Celite S)   Filtercel L   Standard Supercel

**Fig. 14**

*Standard Supercel-Morphologie im Rasterelektronenmikroskop*
*(Die Porendurchmesser des zentralen Partikels liegen bei ca. 1μm)*

Fig. 15

*Filtercel L-Morphologie (Rasterelektronenmikroskop)*

**Fig. 16**

*Celite-S-Morphologie (Rasterelektronenmikroskop)*

**Fig. 17**

*Celite-S-Morphologie: Celite-S-Teilchen (Rasterelektronenmikroskop)*

**Fig. 18**

*Porenstruktur der Celite-S-Partikel (Rasterelektronenmikroskop)*

Fig. 19

Fig. 20

2 µm

**Fig. 21**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0790070 A1

**In der Beschreibung aufgeführte Nicht-Patentliteratur**

- Chemie Lexikon. Georg Thieme Verlag, 1989